(19) Europäisches Patentamt / European Patent Office / Office européen des brevets

(11) **EP 2 915 715 B1**

(12) **EUROPEAN PATENT SPECIFICATION**

(45) Date of publication and mention
of the grant of the patent:
**17.05.2017   Bulletin 2017/20**

(21) Application number: **13851685.1**

(22) Date of filing: **31.10.2013**

(51) Int Cl.:
**B60W 30/09** *(2012.01)*        **B60R 21/00** *(2006.01)*
**B60T 7/12** *(2006.01)*         **G05D 1/02** *(2006.01)*

(86) International application number:
**PCT/JP2013/079593**

(87) International publication number:
**WO 2014/069584 (08.05.2014 Gazette 2014/19)**

(54) **VEHICLE SPEED CONTROL DEVICE AND VEHICLE PROVIDED THEREWITH**

FAHRZEUGGESCHWINDIGKEITSREGELUNGSVORRICHTUNG UND DAMIT AUSGESTATTETES FAHRZEUG

APPAREIL DE COMMANDE DE LA VITESSE D'UN VÉHICULE ET VÉHICULE ÉQUIPÉ DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **31.10.2012   JP 2012240599**

(43) Date of publication of application:
**09.09.2015   Bulletin 2015/37**

(73) Proprietor: **Yamaha Hatsudoki Kabushiki Kaisha Iwata-shi, Shizuoka 438-8501 (JP)**

(72) Inventor: **SANO Naomi
Iwata-shi
Shizuoka 438-8501 (JP)**

(74) Representative: **Grünecker Patent- und Rechtsanwälte
PartG mbB
Leopoldstraße 4
80802 München (DE)**

(56) References cited:
**JP-A- 2006 218 935        JP-A- 2006 350 613
JP-A- 2010 009 607        JP-A- 2010 009 607
JP-A- 2012 008 933        US-A1- 2010 082 251
US-A1- 2011 125 372        US-A1- 2012 035 846**

**Description**

The present invention relates to a vehicle speed control device according to the preamble of independent claim 1 and to a vehicle speed control method according to the preamble of independent claim 11. Such a vehicle speed control device and method can be taken from the prior art document US 2012/0035846 A1.

Some of currently-used golf carts travelling on a vehicle track in golf links have an automatically travelling function. The automatic travelling is conducted by detecting a magnetic field generated from electromagnetic guide path wires. The guide path wires are embedded in the track. If a golfer is on the track upon unmanned automatic travelling through remote control by a remote controller, the golfer may be brought into contact with the golf cart. Then another type of a golf cart with an ultrasonic sensor detecting an obstacle is provided to avoid such contact.

(1) Technique of Patent Literature

Patent Literature 1 discloses a golf cart provided with an automatically travelling device. This achieves automatic traveling along guide path wires on a track. An ultrasonic sensor calculates a distance to an obstacle, and determines the presence or absence of the obstacle depending on the distance.

[Patent Literature]

Patent Literature 1: Japanese Unexamined Patent Publication No. 2003-5832A

Summary of Invention

Technical Problem

However, if the golfer is on the track while recognizing the golf cart, the golfer takes a retracting action such as moving out of the track. When the golfer is far away from the vehicle, the golfer's retracting action causes the vehicle not to contact to the golfer without stopping. On the other hand, when an obstacle detecting device using ultrasonic waves detects the obstacle even under such a condition, the vehicle is controlled to decelerate with no exception. Accordingly, the golf cart often stops even when the golfer recognizes the golf cart. This causes the golf cart to travel slowly.

The present invention has been made regarding the state of the art noted above, and its one object is to provide a vehicle speed control device and method that controls a vehicle speed through estimation of whether or not a person recognizes a vehicle as well as a vehicle provided with the device.

According to the present invention said object is solved by a vehicle speed control device having the features of independent claim 1. Moreover, said object is solved by a vehicle speed control method having the features of independent claim 11. Preferred embodiments are laid down in the dependent claims.

One aspect of the present invention discloses a vehicle speed control device. The vehicle speed control device includes an image sensor capturing an image in front of a vehicle, a person detector detecting a person from the image, a distance detector detecting a distance between the vehicle and the person, a person direction identifying unit identifying a direction of the person, and a vehicle speed controller controlling a speed of the vehicle in accordance with the distance between the vehicle and the person as well as the direction of the person.

With the aspect of the present invention, the image sensor captures the image in front of the vehicle. The person detector is configured to detect the person from the captured image. The distance detector is configured to detect the distance between the detected person and the vehicle. The person direction identifying unit is configured to identify the direction of the person detected in the captured image. Identifying the direction of the person in such a manner gives estimation of whether or not the person recognizes the vehicle. Moreover, the vehicle speed controller is configured to control the vehicle speed in accordance with the distance between the vehicle and the person as well as the direction of the person. Identifying the direction of the person gives estimation of whether or not the person recognizes the vehicle and also gives minute control of the vehicle speed in accordance with the distance between the person and the vehicle. This allows avoidance of contact between the person and the vehicle and reduction in excessive stop control.

Moreover, it is preferable that the vehicle speed controller is configured to control the speed of the vehicle in accordance with the distance between the vehicle and the person with reference to a control distance set in front of the vehicle. Accordingly, the vehicle speed is not controlled for a person out of the control distance. This allows reduction in excess deceleration control.

Moreover, it is preferable that the control distance includes a first control distance at which a stop control is performed upon detection of the person, and a second control distance at which a deceleration control or the stop control is performed upon detection of the person in accordance with the direction of the person. That is, the control distance includes two types of distances, i.e., the first control distance and the second control distance. At the first control distance, the stop control is performed upon the detection of the person. At the second control distance, the deceleration control or the stop control is performed upon the detection of the person in accordance with the direction of the person.

As noted above, the stop control is performed immediately after the detection of the person at the first control distance. This achieves avoidance of the contact between the person and the vehicle close to each other. The distance between the person and the vehicle at the second control distance is longer than that at the first control distance. Consequently, the deceleration control or the stop control is performed at the second control distance in accordance with the direction of the person. This allows avoidance of the contact to the person and reduction in excess stop control.

Moreover, it is preferable that the vehicle speed controller is configured to perform the deceleration control to the vehicle when the person is identified to be directed frontward or sideward, and configured to perform the stop control to the vehicle when the person is identified to be directed backward at the second control distance.

It is estimated that the person directed frontward or sideward relative to the vehicle in a travelling direction recognizes the vehicle, and thus the person is considered to take a retracting action. Accordingly, not the stop control but the deceleration control is performed to the vehicle at the second control distance at which the person is not immediately brought into contact with the vehicle. In contrast to this, it is estimated that the person directed backward relative to the vehicle in the travelling direction fails to recognize the vehicle, and thus the person is considered not to take the retracting action. Accordingly, the stop control is performed even at the second control distance at which the person is not immediately brought into contact with the vehicle. Consequently, this allows appropriate control of the vehicle speed depending on a person's recognizing state of the vehicle.

Moreover, it is preferable that the vehicle speed controller is configured to perform the deceleration control to the vehicle when the person is identified to be directed frontward or outwardly sideward, and configured to perform the stop control to the vehicle when the person is identified to be directed backward or inwardly sideward at the second control distance.

It is estimated that the person directed frontward or outwardly sideward relative to the vehicle in the traveling direction recognizes the vehicle, and thus the person is considered to take the retracting action readily. Accordingly, the vehicle is controlled not to stop but to decelerate at the second control distance at which the person is not immediately brought into contact with the vehicle. In contrast to this, it is estimated that person directed backward relative to the vehicle in the travelling direction fails to recognize the vehicle, and thus the person is considered not to take the retracting action. In addition, it is estimated that the person directed inwardly sideward relative to the vehicle in the travelling direction recognizes the vehicle, but the person is considered not to take the retracting action readily. That is, the person directed inwardly sideward faces the track. Accordingly, the person has to turn back to retract out of the track or move across the track. Consequently, when the person is recognized to be directed backward or inwardly sideward, the vehicle is controlled to stop at the second control distance. This allows appropriate control of the vehicle speed depending on the person's recognizing state of the vehicle.

Moreover, it is preferable that the control distance includes a third control distance at which the deceleration control is performed or is not performed to the vehicle in accordance with the direction of the person upon the detection of the person. A distance between the person and the vehicle at the third distance is longer than that at the first control distance and second control distance, respectively. Consequently, the vehicle is controlled to or not to decelerate depending on the direction of the person. This allows avoidance of contact between the vehicle and the person as well as reduction in excess deceleration control.

Moreover, it is preferable that the vehicle speed controller is configured to perform the deceleration control to the vehicle when the person is identified to be directed backward, and configured not to perform the deceleration control when the person is identified to be directed frontward or sideward at the third control distance.

It is estimated that the person directed frontward or sideward relative to the vehicle in the travelling direction recognizes the vehicle, and thus the person is considered to take the retracting action. Accordingly, the vehicle is controlled not to decelerate at the third control distance at which the person is not brought into contact with the vehicle. On the other hand, it is estimated that the person directed backward relative to the vehicle in the travelling direction fails to recognize the vehicle, and thus the person is considered not to take the retracting action. Accordingly, the vehicle is controlled to deceleration even at the third control distance at which the person is not brought into contact with the vehicle. This allows appropriate control of the vehicle speed in accordance with a person's recognizing state of the vehicle.

Moreover, it is preferable that the vehicle speed controller is configured to perform the deceleration control to the vehicle when the person is identified to be directed backward or inwardly sideward, and configured not perform the deceleration control when the person is identified to be directed frontward or outwardly sideward at the third control distance.

It is estimated that the person directed frontward or outwardly sideward relative to the vehicle in the travelling direction recognizes the vehicle, and the person is considered to take the retracting action readily. Accordingly, the vehicle is controlled not to decelerate at the third control distance at which the person is not brought into contact with the vehicle. On the other hand, it is estimated that the person directed backward relative to the vehicle in the travelling direction fails to recognize the vehicle, and the person is considered not to take the retracting action. Moreover, it is estimated that the person directed inwardly sideward relative to the vehicle in the travelling direction recognizes the vehicle, but the person is considered not to take the retracting action readily. Accordingly, the vehicle is controlled to decelerate even at the third control distance at which the person is identified to be directed backward or inwardly sideward. This allows appropriate control of the vehicle speed in accordance with the person's recognizing state of the vehicle.

Moreover, a vehicle speed sensor and a control distance setting unit are preferably provided. The vehicle speed sensor is configured to detect the speed of the vehicle. The control distance setting unit is configured to set the control distance in accordance with the detected speed of the vehicle. The vehicle speed sensor detects the speed of the vehicle. The control distance setting unit sets the control distance in accordance with the detected speed of the vehicle. Setting the control distance in accordance with the speed of the vehicle allows minute control of the vehicle speed depending on traveling conditions of the vehicle.

Moreover, the vehicle according to the present invention includes the above vehicle speed control device. The vehicle with the vehicle speed control device allows minute control of the vehicle speed in accordance with the distance between the vehicle and the person as well as the direction of the person. This allows avoidance of contact between the person and the vehicle as well as reduction in excess deceleration control.

Advantageous Effects of Invention

With the aspects of the present invention, identifying the direction of the person gives estimation of whether or not the person recognizes the vehicle, and thus allows minute control of the vehicle speed in accordance with the distance between the person and the vehicle. This allows provision of the vehicle speed control device that controls the vehicle speed through estimation of whether or not the person recognizes the vehicle as well as the vehicle provided with the device.

Brief Description of Drawings

Figure 1 is a side view of a vehicle according to embodiments of the present invention.
Figure 2 is a block diagram of the vehicle according to the embodiments.
Figure 3 is a block diagram of a vehicle speed control device according to one of the embodiments.
Figure 4 illustrates a vehicle speed control distance according to the embodiment.
Figure 5 is a table explanatorily illustrating the control distance according to the embodiment.
Figure 6 is a flow chart of a vehicle speed control according to the embodiment.
Figure 7 illustrates an image with detected pedestrians according to the embodiment.
Figure 8 is a block diagram of a vehicle speed control device according to another embodiment of the present invention.
Figure 9 is a table explanatorily illustrating a control distance according to the other embodiment.
Figure 10 is a flow chart of a vehicle speed control according to the embodiment.
Figure 11 illustrates an image with detected pedestrians according to one modification of the present invention.

Embodiment 1

The following describes Embodiment 1 of the present invention with reference to drawings. Embodiment 1 describes an automatically travelling golf cart as one example of a vehicle in the present invention. Here, the vehicle is not limited to a four-wheeled vehicle. Alternatively, the vehicle may be a three-wheeled vehicle or may be of a monorail type. In addition, the vehicle is not limited to a golf cart. For instance, examples of the vehicle include an unmanned guided vehicle that travels in a factory or an orchard. Hereinunder, the terms front and rear as well as right and left are described with reference to a direction where a vehicle 1 travels ahead.

1. Outline Configuration of Vehicle

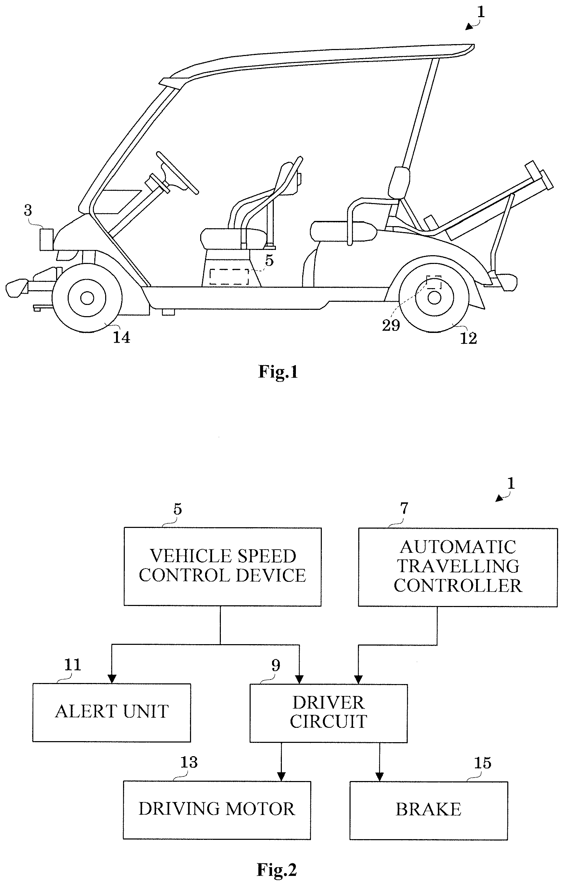

Reference is made to Figures 1 and 2. Figure 1 is a side view of the vehicle. Figure 2 is a partial block diagram of the vehicle. The vehicle 1 is a guided vehicle automatically traveling while being guided through electromagnetic waves emitted from guide path wires. The guide path wires are embedded in a track.

The vehicle 1 is provided with a vehicle speed control device 5, an automatic travelling controller 7, a driver circuit 9, an alert unit 11, a driving motor 13, and brakes 15. The vehicle speed control device 5 detects a person to control a speed of the vehicle. The automatic travelling controller 7 performs control so as for the vehicle 1 to automatically travel along the guide path wires. The driver circuit 9 controls the driving motor 13 and the brakes 15 through commands from the vehicle speed control device 5 and the automatic travelling controller 7. The alert unit 11 alerts a driver and vehicle's surroundings when the vehicle speed control device 5 detects the person. The driving motor 13 drives wheels 12. The number of revolution of the driving motor 13 is controlled by the driver circuit 9. The brakes 15 brake the wheels 12 and 14 respectively.

In Embodiment 1, the driving motor 13 drives the wheels 12. However, this is not limitative. For instance, an engine may drive the wheels 12. Moreover, the brakes 15 are each a hydraulic drum brake provided on the wheels 12 and 14 individually. The driver circuit 9 rotates a brake motor (not shown) to control brake hydraulic pressure of the brake 15. The driver circuit 9 prioritizes a control signal from the vehicle speed control device 5 over a control signal from the automatic travelling controller 7.

2. Configuration of Vehicle Speed Control Device

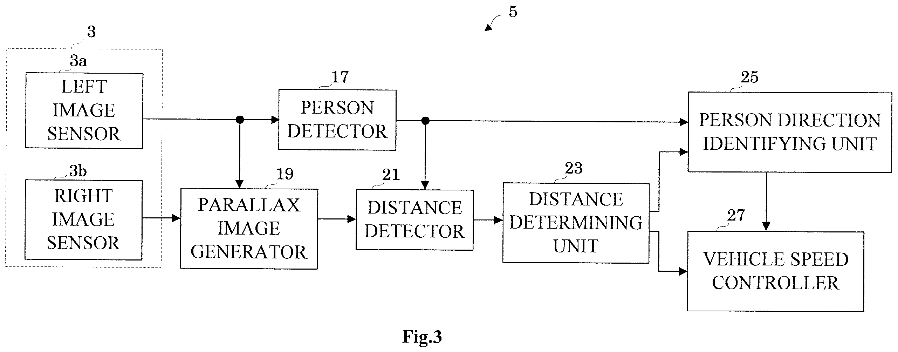

The following describes a configuration of the vehicle speed control device 5 provided in the vehicle 1 with reference to Figure 3. Figure 3 is a block diagram of the vehicle speed control device.

The vehicle speed control device 5 includes a stereo camera 3 capturing images in front of the vehicle 1, a person detector 17, a parallax image generator 19, a distance detector 21, a distance determining unit 23, a person direction identifying unit 25, and a vehicle speed controller 27. The person detector 17, the parallax image generator 19, the distance detector 21, the distance determining unit 23, the person direction identifying unit 25, and the vehicle speed controller 27 are each formed by a microprocessor or an FPGA (Field Programmable Gate Array). The following describes each of the above components in turn.

Left image sensor 3a and right image sensor 3b of the stereo camera 3 are installed under specific geometric conditions. In the present embodiment, the left and right image sensors 3a and 3b are installed horizontally at a certain distance. In other words, the left and right image sensors 3a and 3b are parallel stereos. Moreover, the image sensors 3a and 3b are each a common visual sensor such as a CCD or a CMOS. In order to match positions in row of the captured images, i.e., to match epipolar line of the images, the image sensors 3a and 3b are each subjected to camera calibration in advance. A left image captured by the left image sensor 3a is outputted to the person detector 17 as a reference image. In addition, a right image captured by the right image sensor 3b and the left image are outputted to the parallax image generator 19.

The person detector 17 detects persons in the inputted reference image through a template matching. The person detector 17 stores templates of persons with various sizes and shapes. Performing the matching of the templates on the reference image causes detection of whether or not any person is in the reference image. A position of a person in the reference image is also detected along with the detection of the person in the reference image.

The parallax image generator 19 performs stereo matching on the inputted left and right images to generate a parallax image. Examples of the stereo matching include a method with SAD (Sum of Absolute Difference) or with a Hamming distance.

The distance detector 21 calculates a distance between the person detected in the reference image and the stereo camera 3 based on the parallax image. The distance is calculated from the parallax image using the currently-used parallel stereo method. That is, distance information applied to each pixel in the left image as the reference image can be calculated using a distance between the two image sensors 3a and 3b, and a focus distance and the parallax of the two image sensors 3a and 3b. The distance between the vehicle 1 and the person detected as above is outputted to the distance determining unit 23.

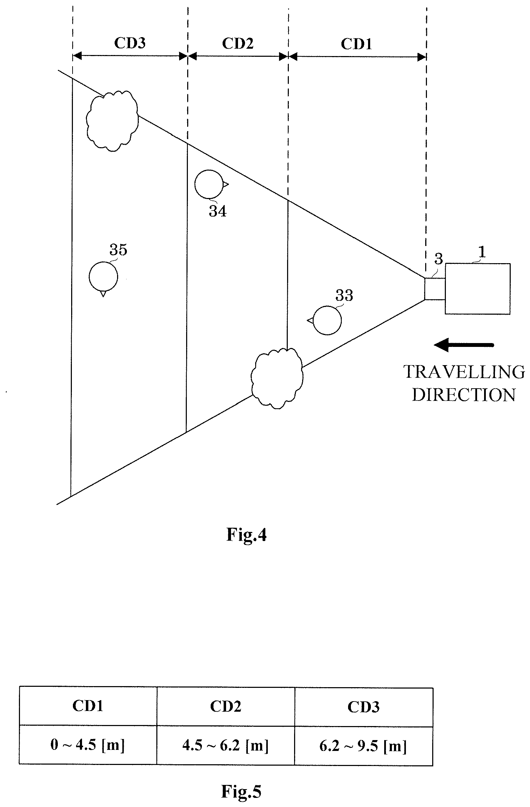

The distance determining unit 23 determines whether or not the detected distance between the vehicle 1 and the person falls within a control distance set in front of the vehicle. Reference is made to Figure 4. Figure 4 explanatorily illustrates the vehicle speed control distance. In Embodiment 1, the control distance for a reference of the vehicle speed is set by three stages. That is, the three stages are a first control distance CD1 closest to the vehicle 1, a second control distance CD2 secondary closest to the vehicle 1, and a third control distance CD3 furthest from the vehicle 1.

In Embodiment 1, the first to third control distances CD1 to CD3 are each preset in correspondence to the highest speed of the vehicle 1. As illustrated in Figure 5, the first control distance CD1 is in a range of 0 to 4.5 m, the second control distance CD2 is in a range of 4.5 to 6.2 m, and the third control distance CD3 is in a range of 6.2 to 9.5 m, each from the vehicle 1, in Embodiment 1. The control distance corresponds to the first to third control distances CD1 to CD3, and thus falls within a range of 0 to 9.5 m from the vehicle 1. Here, the highest speed of the vehicle 1 is assumed for 12 km/h.

If a distance to the detected person is not equal to or not less than the control distance, the distance determining unit 23 completes control of the vehicle speed. If a distance to the person is equal to or less than the control distance, the distance determining unit 23 determines whether or not the distance is equal to or less than the first control distance CD1 as the stop control distance. If the distance to the person is equal to or less than the first control distance CD1, the distance determining unit 23 outputs a first distance determination signal to the vehicle speed controller 27.

If the distance to the person is not equal to or not less than the first control distance CD1, the distance determining unit 23 issues a command to the person direction identifying unit 25 to identify a direction of the detected person. In addition, the distance determining unit 23 determines whether or not the distance to the person is present within the second control distance. If the distance to the person is within the second control distance CD2, the distance determining unit 23 outputs a second distance determination signal to the vehicle speed controller 27. If the distance to the person is not within the second control distance CD2, the distance to the person is within the third control distance. Accordingly, the distance determining unit 23 outputs a third distance determination signal to the vehicle speed controller 27.

The person direction identifying unit 25 identifies the direction of the detected person from a direction of the person's face. The template matching is performed between a portion corresponding to the person's face in the image and templates of faces prepared in advance in various directions, whereby the direction of the person's face is identified. In Embodiment 1, it is identified through the direction of the person's face that the person is directed frontward in a correct direction relative to the vehicle 1 in the travelling direction, sideward across the travelling direction of the vehicle 1, or backward relative to the vehicle 1 in an opposite direction to the travelling direction of the vehicle 1.

If the person is directed forward or sideward relative to the vehicle 1, it is estimated that the person recognizes the vehicle 1. Then, the person is identified to face the vehicle 1 when the person is directed forward or sideward relative to the vehicle 1. Moreover, if the person is directed backward relative to the vehicle 1, it is estimated that the person fails to recognize presence of the vehicle 1. Then the person is identified not to face the vehicle when the person is directed backward relative to the vehicle 1. An identifying signal corresponding to the identified direction of the person is outputted to the vehicle speed controller 27.

When the person recognizes the vehicle 1, the person close to the vehicle 1 is considered to take the retracting action away from the vehicle 1. On the other hand, if the person fails to recognize the vehicle 1, the person is considered not to take the retracting action to move away from the vehicle 1. Accordingly, a stronger deceleration control is preferably performed when the person fails to recognize the vehicle 1 compared to when the person recognizes the vehicle 1. Moreover, when the person recognizes the vehicle 1, the person takes the retracting action in association with approach to the vehicle 1. Consequently, no excess deceleration is required.

Then, the vehicle speed controller 27 determines the vehicle speed in accordance with the distance to the detected person and the direction of the person. If receiving a first distance determination signal from the distance determining unit 23, the vehicle speed controller 27 determines stop of the vehicle 1 with a vehicle speed of 0. In this case, the vehicle speed controller 27 issues a command to the driver circuit 9 to perform a stop control. Moreover, the vehicle speed controller 27 determines one of the stop control, the deceleration control, and no deceleration control in accordance with a second or third distance determination signal from the distance determining unit 23 and the identifying signal. The identifying signal is the determination result of the person's direction from the person direction identifying unit 25. The determined vehicle speed control is issued to the driver circuit 9.

Upon receipt of the stop control from the vehicle speed controller 27, the driver circuit 9 operates the driving motor 13 to brake regeneratively, and causes the brakes 15 to brake rotation of the wheels 12 and 14 to stop the vehicle 1. Moreover, if the deceleration control is issued, the driving motor 13 brakes regeneratively to decelerate the vehicle 1.

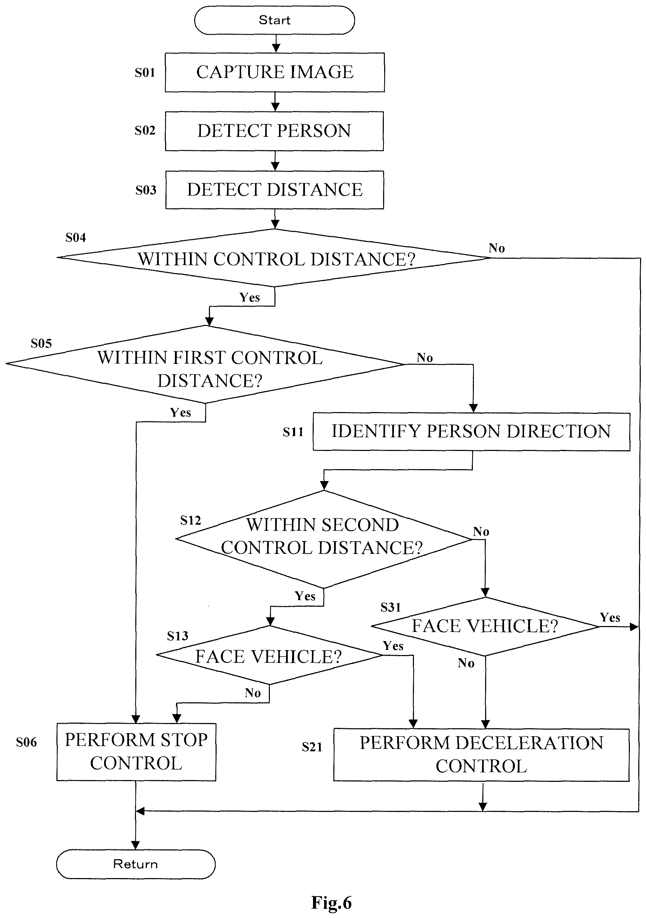

The following describes the vehicle speed control in Embodiment 1 with reference to Figure 6. Figure 6 is a flow chart illustrating procedures of the vehicle speed control.

The stereo camera 3 provided on the front face of the vehicle 1 captures images (step S01). That is, the left and right image sensors 3a and 3b capture the images in front of the vehicle 1. The person detector 17 performs template matching on the left image captured by the left image sensor 3a as the reference image, whereby a person is detected (step S02). If no person is detected, the vehicle speed control is completed, and processes from the step 01 are again performed at an image capturing timing of the next frame. If the person is detected in the reference image, a distance between the detected person and the vehicle 1 is detected from the parallax image generated based on the right image captured by the right image sensor 3b and the left image (step S03).

Then, it is determined whether or not the distance to the detected person is within the control distance (step S04). If the distance to the person is not within the control distance (No in the step S04), the vehicle speed control is completed, and processes from the step 01 are again performed at an image capturing timing of the next frame. If the distance to the person is within the control distance (Yes in the step S04), then it is determined whether or not the distance to the detected person is within a first control distance CD1 for a stop distance (step S05).

If the detected distance is within the first control distance CD1 (Yes in the step S05), the distance determining unit 23 outputs a first distance determination signal to the vehicle speed controller 27. The vehicle speed controller 27 receives the first distance determination signal, and outputs a stop signal to the driver circuit 9 to perform the stop control (step S06). Consequently, the driver circuit 9 causes the driving motor 13 to brake and operates the brakes 15 to stop the vehicle 1.

If the detected distance is not within the first control distance CD 1 (No in the step S05), the person direction identifying unit 25 identifies the direction of the detected person (step S11). Moreover, the distance determining unit 23 determines whether or not the detected person is present within the second control distance CD2 (step S12). If the detected person is present within the second control distance CD2 (Yes in the step S12), the person direction identifying unit 25 further identifies whether or not the person faces the vehicle 1 (step S 13). If the person does not face the vehicle 1 (No in the step S 13), it is estimated that the person fails to recognize the vehicle 1. Accordingly, the vehicle speed controller 27 outputs the stop signal to the driver circuit 9 to perform the stop control (step S06). If the person faces the vehicle 1 (Yes in the step S 13), it is estimated that the person recognizes the vehicle 1. Accordingly, the vehicle speed controller 27 outputs the deceleration signal to the driver circuit 9 to perform the deceleration control (step S21).

If the detected person is not present in the second control distance CD2 (No in the step S12), it is identified that the person is present at the third control distance CD3 since the person is present at the control distance out of the first and second control distances CD1 and CD2. The person direction identifying unit 25 further identifies whether or not the person faces the vehicle 1 (step S31). If the person does not face the vehicle 1 (No in the step S31), it is estimated that the person fails to recognize the vehicle 1. However, the person is away from the vehicle 1, and accordingly, the vehicle speed controller 27 outputs the deceleration signal to the driver circuit 9 to perform the deceleration control (step S21). If the person faces the vehicle 1 (Yes in the step S31), it is estimated that the person recognizes the vehicle 1. Accordingly, the vehicle speed control is completed with no deceleration control since the person is away from the vehicle 1. When the vehicle speed control is completed, processes from the step 01 are again performed at an image capturing timing of the next frame.

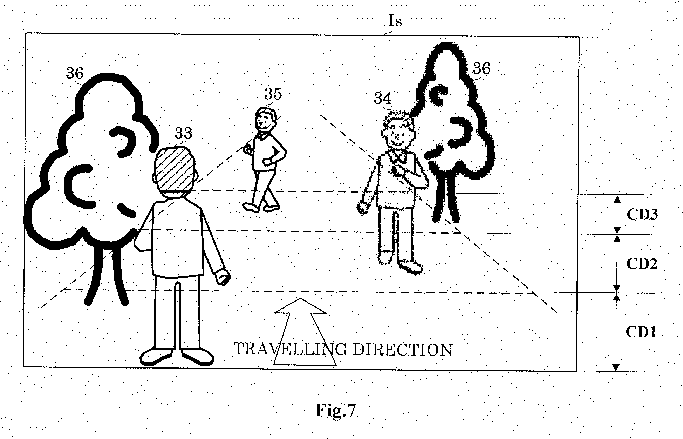

Reference is made to Figure 7. Figure 7 illustrates an image with pedestrians in a positional relationship illustrated in Figure 4. In a reference image Is, an arrow indicates the travelling direction of the vehicle 1. If a person 33 is detected in the reference image Is captured by the left image sensor 3a, a distance to the person 33 is within the first control distance CD1, and thus the vehicle 1 is controlled to stop without identifying the direction of the face of the person 33. If a person 34 is detected, a distance to the person 34 is within the second control distance CD2, and thus the direction of the face of the person 34 is identified. Here, the face of the person 34 is directed forward. Accordingly, it is identified through a template matching that the person 34 is directed forward. The person 34 is directed forward within the second control distance CD2. Consequently, the vehicle 1 is subjected to the deceleration control. If a person 35 is detected, the distance to the person 35 is within the third control distance CD3, and thus the direction of the face of the person 35 is identified. Here, the face of the person 35 is directed sideward. Accordingly, it is identified through a template matching that the person 35 is directed sideward. The person 35 is directed sideward within the third control distance CD3. Consequently, the vehicle 1 is not subjected to the deceleration control.

As noted above, the aspect of Embodiment 1 controls the vehicle speed in accordance with the distance between the vehicle 1 and the person and the direction of the person. Consequently, minute control of the speed of the vehicle 1 is obtainable depending on a state of the person in front of the vehicle 1. This allows avoidance of contact between the person and the vehicle 1 as well as reduction in excess deceleration control.

Moreover, the direction of the person gives estimation of whether or not the person recognizes the approaching vehicle 1. The deceleration control or the stop control is performed more strongly when the person fails to recognize the vehicle 1 compared to when the person recognizes the vehicle 1. This avoids contact between the person and the vehicle 1. In addition, if the person recognizes the vehicle 1, an excess deceleration control is avoidable, leading to an enhanced travelling efficiency of the vehicle. Moreover, the vehicle speed is not controlled for the person out of the control distance. This allows reduction in excess deceleration control. If the person is detected in the first control distance CD1, the stop control is immediately performed. Accordingly, the contact between the person and the vehicle 1 is avoidable for the person close to the vehicle 1. The person is further from the vehicle 1 in the second control distance CD2 than in the first control distance CD1. Consequently, in the second control distance CD2, the deceleration control or the stop control is performed depending on the direction of the person. This allows avoidance of the contact to the person as well as reduction in excess stop control.

Moreover, the person is detected through the template matching. This allows prevention of erroneous detection of timbers as a person. For instance, erroneous detection of timbers out of links as a person is avoidable. Consequently, the deceleration control and the stop control from the erroneous detection are also avoidable, leading to a more enhanced traveling efficiency of the vehicle.

Embodiment 2

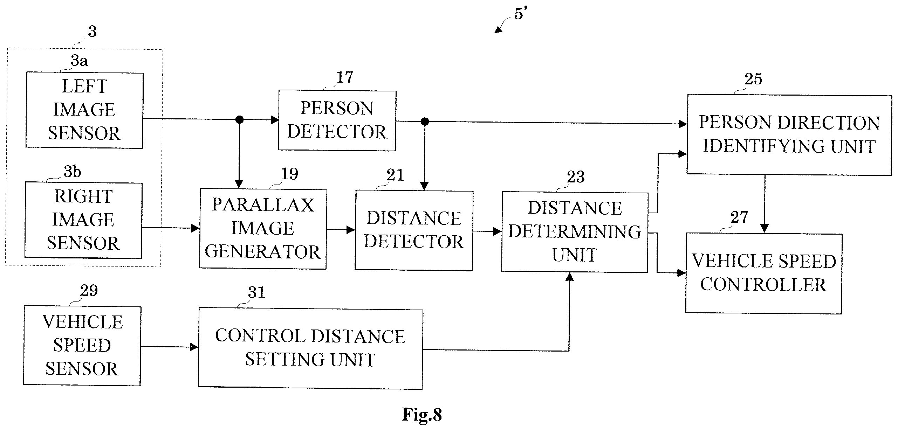

The following describes a vehicle speed control device according to Embodiment 2 with reference to Figure 8. Figure 8 is a block diagram of a vehicle speed control device 5' according to Embodiment 2. In Figure 8, since the elements with the same numerals in Embodiment 1 each have the same configuration as in Embodiment 1, description thereof is to be omitted. In addition, the elements of the vehicle 1 other than those described hereinunder are the same in configuration as those in Embodiment 1.

In Embodiment 1, the control distance is set in advance. In contrast to this, in Embodiment 2, a control distance is set in accordance with a speed of the vehicle. Embodiment 2 includes a vehicle speed control device 5' whose configuration is combination of the vehicle speed control device 5 in Embodiment 1 and a vehicle speed sensor 29 and a control distance setting unit 31. The control distance setting unit 31 is formed by a microprocessor or an FPGA, which is similar to the person detector 17 or the like.

The vehicle speed sensor 29 is attached to the wheel 12 of the vehicle 1. Detection of a rotation speed of the wheel 12 causes detection of a speed of the vehicle 1. The detected vehicle speed is outputted to the control distance setting unit 31.

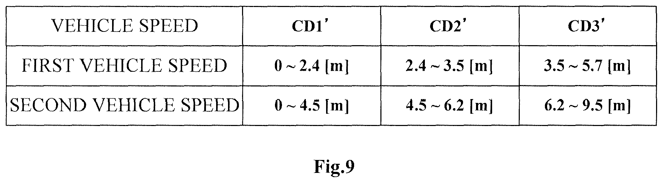

The control distance setting unit 31 sets a control distance used for controlling the vehicle speed in accordance with the detected vehicle speed. Figure 9 is a table illustrating the control distance set in accordance with the vehicle speed. Here, the vehicle speed is divided by two stages, i.e., a first vehicle speed as a normal speed of the vehicle 1 and a second vehicle speed higher than the normal speed. For instance, it is assumed that the first vehicle speed is equal to or less than 8 km/h, and the second vehicle speed is more than 8 km/h and is equal to or less than 12 km/h.

If a person is detected, a first control distance CD1' at which a stop control is performed is calculated as under regardless of a direction of the person. It is assumed that the vehicle 1 travels at the highest speed 8 km/h ($\approx$ 2.2m/s) for the first vehicle speed. Assuming that a processing time until the vehicle speed control device 5' detects the person is 0.5 s, the vehicle 1 is in an idle running state for the processing time during a period of time from capturing an image to starting the vehicle speed control. A distance by which the vehicle 1 travels under the assumption that the vehicle 1 decelerates at an acceleration of 0.2G after the idle running state is calculated by the following expression:

$$2.2{\times}0.5 + (2.2{\times}2.2) \, / \, (9.8{\times}0.2{\times}2) \approx 2.4 \, [\mathrm{m}] \, \dots \, (1)$$

It is assumed that the vehicle 1 travels at the highest speed of 12 km/h ($\approx$ 3.3m/s) for the second vehicle speed with the highest speed of the vehicle 1 of 12 km/h. The vehicle 1 is in an idle running state for a processing time (0.5s) during which the vehicle speed control device 5 detects the person. Then a distance by which the vehicle 1 travels under the assumption that the vehicle decelerates and stops at an acceleration of 0.2G is calculated by the following expression:

$$3.3{\times}0.5 + (3.3{\times}3.3) \, / \, (9.8{\times}0.2{\times}2) \approx 4.5 \, [\mathrm{m}] \, \dots \, (2)$$

Moreover, it is assumed that a second control distance CD2' is a distance after a 0.5-second idle running time elapses from the first control distance CD1'. That is, the second control distance CD2' at the first vehicle speed is given by:

$$2.4 + 2.2{\times}0.5 = 3.5 \, [\mathrm{m}] \, \dots \, (3)$$

Moreover, second control distance CD2' at the second vehicle speed is given by:

$$4.5 + 3.3{\times}0.5 = 6.2 \, [\mathrm{m}] \, \dots \, (4)$$

Moreover, it is assumed that a third control distance CD3' is a distance after a 1-second idle running time elapses from the second control distance CD2'. That is, the third control distance CD3' at the first vehicle speed is given by:

$$3.5 + 2.2{\times}1.0 = 5.7 \, [\mathrm{m}] \, \dots \, (5)$$

Moreover, the third control distance CD3' at the second vehicle speed is given by:

$$6.2 + 3.3{\times}1.0 = 9.5 \, [\mathrm{m}] \, \dots \, (6)$$

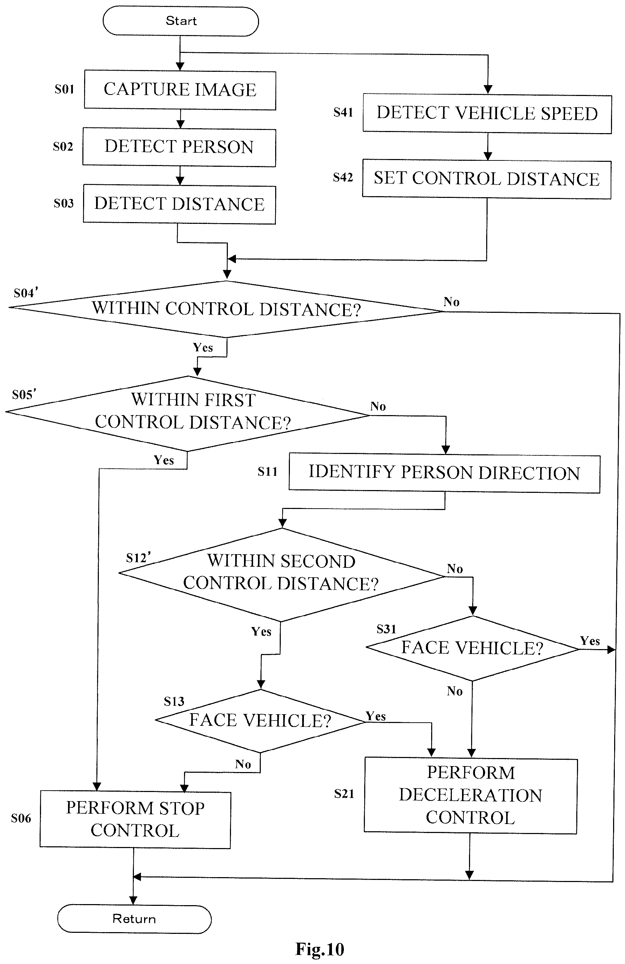

As noted above, the control distance setting unit 31 sets the control distance depending on the vehicle speed. That is, the first to third control distances CD1' to CD3' are each set depending on the vehicle speed. The set control distance is outputted to the distance determining unit 23. The distance determining unit 23 determines whether or not the detected person is present within the control distance with reference to the set control distance, which is similar to Embodiment 1. The vehicle speed controller 27 controls the vehicle speed based on the determination result. This allows a minute vehicle speed control in accordance with the distance between the person and the vehicle 1. The following describes operation of the vehicle speed control in Embodiment 2 with reference to Figure 10. Figure 10 is a flow chart illustrating procedures of the vehicle speed control.

In Embodiment 2, the steps S01 to S03 are performed in a similar manner to Embodiment 1. Moreover, in parallel with the steps S01 to S03, a vehicle speed is detected by reading a measured value of the vehicle speed sensor 29 of the vehicle 1 upon capturing the image (step S41). The control distance setting unit 31 sets a control distance in accordance with the detected vehicle speed (step S42).

The distance determining unit 23 determines whether or not the detected distance is within the control distance set in accordance with the vehicle speed (step S04'). If the distance to the person is not within the control distance (No in the step S04'), the vehicle speed control is completed, and processes from the step 01 are again performed at an image capturing timing of the next frame. If the distance to the person is within the control distance (Yes in the step S04'), it is further identified whether or not the detected distance is within the first control distance CD1' set in accordance with the vehicle speed (step S05').

If the detected distance is within the set first control distance CD1' (Yes in the step S05'), the distance determining unit 23 outputs a first distance determination signal to the vehicle speed controller 27. The vehicle speed controller 27 outputs a stop signal to the driver circuit 9 to perform a stop control (step S06). This causes the driver circuit 9 to brake the driving motor 13, and operates the brakes 15 to stop the vehicle 1.

If the detected distance is not within the set first control distance CD1' (No in the step S05'), the person direction identifying unit 25 identifies the detected direction of the person (step S11). The distance determining unit 23 further determines whether or not the detected person is present in the second control distance CD2' set in accordance with the vehicle speed (step S12'). If the detected person is present in the second control distance CD2' (Yes in the step S12'), the person direction identifying unit 25 further identifies whether or not the person faces the vehicle 1 (step S 13). If the person does not face the vehicle 1 (No in the step S 13), it is estimated that the person fails to recognize the vehicle 1. Accordingly, the vehicle speed controller 27 outputs the stop signal to the driver circuit 9 to perform the stop control (step S06). If the person faces the vehicle 1 (Yes in the step S13), it is estimated that the person recognizes the vehicle 1. Accordingly, the vehicle speed controller 27 outputs the deceleration signal to the driver circuit 9 to perform the deceleration control (step S21).

Then, if the detected person is not present in the second control distance CD2' set in accordance with the vehicle speed (No in the step S12'), the person is present in the control distance out of the first and second control distance CD1' and CD2'. Consequently, it is identified that the person is present in the third control distance CD3'. The person direction identifying unit 25 further identifies whether or not the person faces the vehicle 1 (step S31). If the person does not face the vehicle 1 (No in the step S31), it is estimated that the person fails to recognize the vehicle 1. However, the person is away from the vehicle 1. Accordingly, the vehicle speed controller 27 outputs the deceleration signal to the driver circuit 9 to perform the deceleration control (step S21). If the person faces the vehicle 1 (Yes in the step S31), it is estimated that the person recognizes the vehicle 1. Here, the person is away from the vehicle 1. Accordingly, the vehicle speed control is completed without performing the deceleration control. When the vehicle speed control is completed, processes from the step 01 are again performed at the image capturing timing of the next frame.

As noted above, in Embodiment 2, the vehicle speed sensor 29 detects the speed of the vehicle 1, and the control distance setting unit 31 sets the control distance in accordance with the detected vehicle speed. Setting the control distance in accordance with the vehicle speed allows minute control of the vehicle speed depending on traveling conditions of the vehicle 1.

(1) In the above embodiments, the direction of the person is classified by three types, i.e., forward, sideward, and backward. Alternatively, the direction may be classified more finely. For instance, the person direction identifying unit 25 may classify the sideward by outwardly sideward and inwardly sideward relative to the center of the reference image.

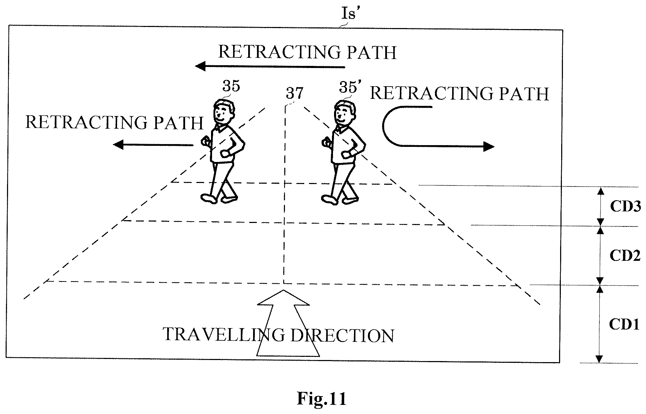

The following describes the above classification with reference to Figure 11. Figure 11 is an image with detected pedestrians. A person 35 is directed outwardly sideward relative to the center 37 of the reference image Is'. Consequently, the person 35 can take a retracting action immediately by going straight ahead after recognizing the vehicle 1. In other words, the person 35 evacuates on a linear path. On the other hand, a person 35' is directed inwardly sideward relative to the center 37 of the reference image Is', and thus faces the center of the track. Consequently, even when recognizing the vehicle 1, the person 35' has to turn back and retract out of the track or has to move across the track. In other words, the person 35' leaves on a path across the center of the track or turn ahead. As a result, the person directed inwardly sideward takes more time to retract than the person directed outwardly sideward.

Then, it is identified that the person directed outwardly sideward faces the vehicle 1 and the person directed inwardly sideward does not face the vehicle 1. This achieves stronger deceleration control when the person is directed inwardly sideward. Consequently, contact between the person and the vehicle 1 is avoidable depending on walking conditions of the person, and reduction in excess deceleration control is also obtainable.

(2) In the above embodiments, the direction of the person may be classified more finely. For instance, if the person is directed frontward and sideward, the person direction identifying unit 25 further identifies the person upward, downward or horizontally. If the person is directed frontward and sideward relative to the vehicle 1 and the face of the person is directed horizontally, it is estimated that the person recognizes the presence of the vehicle 1, and thus it is identified that the person faces the vehicle. Moreover, if the person is directed frontward and sideward but the face of the person is directed upward or downward in addition to the case when the person is directed backward relative to the vehicle 1, it is estimated that the person fails to recognize the presence of the vehicle 1. Accordingly, it is identified that the person does not face the vehicle. As noted above, the person direction identifying unit 25 identifies horizontal and vertical directions of the face in addition to frontward, sideward, and backward. Then the vehicle speed controller 27 controls the vehicle speed in accordance with the identified direction of the person. This allows minute control of the vehicle speed depending on the person's condition.

(3) In the above embodiments, the stereo camera 3 is adopted and generates the parallax image. Then a stereo matching is performed on the parallax image to obtain distance information. However, this is not limitative. For instance, a radar scanner may obtain the distance information between the person and the vehicle 1. In this case, the image captured by the image sensor has to correspond to distance information obtained by the radar scanner in advance. Alternatively, instead of the stereo camera 3, a motion stereo method with a monocular image sensor may be adopted to obtain distance information in front of the vehicle 1.

Reference Signs List

| | |
|---|---|
| 1 | vehicle |
| 3 | stereo camera |
| 3a | left image sensor |
| 3b | right image sensor |
| 5 | vehicle speed control device |
| 17 | person detector |
| 21 | distance detector |
| 25 | person direction identifying unit |
| 27 | vehicle speed controller |
| 29 | vehicle speed sensor |
| 31 | control distance setting unit |
| CD1 | first control distance |
| CD2 | second control distance |
| CD3 | third control distance |

**Claims**

1. A vehicle speed control device, comprising:

   an image sensor (3a) configured for capturing an image in front of a vehicle; a person detector (17) configured to detect a person from the image;
   a distance detector (21) configured to detect a distance between the vehicle and the person; and
   a vehicle speed controller (27) configured to control a speed of the vehicle in accordance with the distance between the vehicle and the person, **characterized by** a person direction identifying unit (25) configured to identify a direction of the person,
   wherein the vehicle speed controller (27) is configured to control the speed of the vehicle in accordance with the distance between the vehicle and the person as well as the direction of the person.

2. A vehicle speed control device according to claim 1, **characterized in that** the vehicle speed controller (27) is configured to control the speed of the vehicle in accordance with the distance between the vehicle and the person with reference to a control distance (CD1-CD3) set in front of the vehicle.

3. A vehicle speed control device according to claim 2, **characterized in that** the control distance (CD1-CD3) includes a first control distance (CD1) at which a stop control is performed upon detection of the person, and a second control distance (CD2) at which a deceleration control or the stop control is performed upon detection of the person in accordance with the direction of the person.

4. A vehicle speed control device according to claim 3, **characterized in that** the vehicle speed controller (27) is configured to perform the deceleration control to the vehicle when the person is identified to be directed frontward or sideward, and configured to perform the stop control to the vehicle when the person is identified to be directed backward at the second control distance (CD2).

5. A vehicle speed control device according to claim 3, **characterized in that** the vehicle speed controller (27) is configured to perform the deceleration control to the vehicle when the person is identified to be directed frontward or outwardly sideward, and configured to perform the stop control to the vehicle when the person is identified to be directed backward or inwardly sideward at the second control distance (CD2).

6. A vehicle speed control device according to any one of claims 3 to 5, **characterized in that** the control distance (CD1-CD3) includes a third control distance (CD3) at which the deceleration control is performed or is not performed to the vehicle depending on the direction of the person upon the detection of the person.

7. A vehicle speed control device according to claim 6, **characterized in that** the vehicle speed controller (27) is configured to perform the deceleration control to the vehicle when the person is identified to be directed backward, and configured not to perform the deceleration control when the person is identified to be directed frontward or sideward at the third control distance (CD3).

8. A vehicle speed control device according to claim 6, **characterized in that** the vehicle speed controller (27) is configured to perform the deceleration control to the vehicle when the person is identified to be directed backward or inwardly sideward, and configured not to perform the deceleration control when the person is identified to be directed frontward or outwardly sideward at the third control distance (CD3).

9. A vehicle speed control device according to any one of claims 2 to 8, **characterized by** a vehicle speed sensor (29) configured to detect the speed of the vehicle; and
a control distance setting unit (31) configured to set the control distance (CD1-CD3) in accordance with the detected speed of the vehicle.

10. A vehicle provided with the vehicle speed control device according to any one of claims 1 to 9.

11. A vehicle speed control method, comprising:

capturing an image in front of a vehicle;
detecting a person from the image;
detecting a distance between the vehicle and the person; and
controlling a speed of the vehicle in accordance with the distance between the vehicle and the person, **characterized by**
identifying a direction of the person; and
controlling the speed of the vehicle in accordance with the distance between the vehicle and the person as well as the direction of the person.

12. A vehicle speed control method according to claim 11, **characterized by** controlling the speed of the vehicle in accordance with the distance between the vehicle and the person with reference to a control distance (CD1-CD3) set in front of the vehicle, preferably the control distance (CD1-CD3) includes a first control distance (CD1) at which a stop control is performed upon detection of the person, and a second control distance (CD2) at which a deceleration control or the stop control is performed upon detection of the person in accordance with the direction of the person.

13. A vehicle speed control method according to claim 12, **characterized in that** the vehicle speed performing the deceleration control to the vehicle when the person is identified to be directed frontward or sideward, and configured to perform the stop control to the vehicle when the person is identified to be directed backward at the second control distance (CD2), or
performing the deceleration control to the vehicle when the person is identified to be directed frontward or outwardly sideward, and configured to perform the stop control to the vehicle when the person is identified to be directed backward or inwardly sideward at the second control distance (CD2).

**14.** A vehicle speed control method according to any one of claims 12 to 13, **characterized in that** the control distance (CD1-CD3) includes a third control distance (CD3) at which the deceleration control is performed or is not performed to the vehicle depending on the direction of the person upon the detection of the person.

**15.** A vehicle speed control method according to claim 14, **characterized by** performing the deceleration control to the vehicle when the person is identified to be directed backward, and configured not to perform the deceleration control when the person is identified to be directed frontward or sideward at the third control distance (CD3), or performing the deceleration control to the vehicle when the person is identified to be directed backward or inwardly sideward, and configured not to perform the deceleration control when the person is identified to be directed frontward or outwardly sideward at the third control distance (CD3).

**Patentansprüche**

**1.** Eine Fahrzeug-Geschwindigkeits-Steuervorrichtung, die umfasst:

einen Abbildungs-Sensor (3a), konfiguriert zum Aufnehmen einer Abbildung vor einem Fahrzeug;
einen Personen-Detektor (17), konfiguriert um eine Person von der Abbildung zu erfassen;
einen Abstands-Detektor (21), konfiguriert um einen Abstand zwischen dem Fahrzeug und der Person zu erfassen; und
eine Fahrzeug-Geschwindigkeits-Steuerung (27), konfiguriert um eine Geschwindigkeit des Fahrzeugs in Übereinstimmung mit dem Abstand zwischen dem Fahrzeug und der Person zu steuern, **gekennzeichnet durch** eine Person-Richtungs-Identifikationseinheit (25), konfiguriert um eine Richtung der Person zu identifizieren, wobei die Fahrzeug-Geschwindigkeits-Steuerung (27) konfiguriert ist um die Geschwindigkeit des Fahrzeugs in Übereinstimmung mit dem Abstand zwischen dem Fahrzeug und der Person sowie der Richtung der Person zu steuern.

**2.** Eine Fahrzeug-Geschwindigkeits-Steuervorrichtung gemäß Anspruch 1, **dadurch gekennzeichnet, dass** die Fahrzeug-Geschwindigkeits-Steuerung (27) konfiguriert ist um die Geschwindigkeit des Fahrzeugs in Übereinstimmung mit dem Abstand zwischen dem Fahrzeug und der Person mit Bezug auf eine Steuer-Abstand (CD1-CD3), gesetzt vor dem Fahrzeug, zu steuern.

**3.** Eine Fahrzeug-Geschwindigkeits-Steuervorrichtung gemäß Anspruch 2, **dadurch gekennzeichnet, dass** der Steuer-Abstand (CD1-CD3) einen ersten Steuer-Abstand (CD1), an dem eine Stopp-Steuerung aufgrund der Erfassung der Person durchgeführt ist, und einen zweiten Steuer-Abstand (CD2), an dem eine Verzögerungs-Steuerung oder die Stopp-Steuerung aufgrund der Erfassung der Person in Übereinstimmung mit der Richtung der Person durchgeführt ist, beinhaltet.

**4.** Eine Fahrzeug-Geschwindigkeits-Steuervorrichtung gemäß Anspruch 3, **dadurch gekennzeichnet, dass** die Fahrzeug-Geschwindigkeits-Steuerung (27) konfiguriert ist um die Verzögerungs-Steuerung des Fahrzeugs durchzuführen, wenn die Person identifiziert ist sich nach Vorne oder zur Seite zu richten, und konfiguriert ist um die Stopp-Steuerung des Fahrzeugs durchzuführen, wenn die Person identifiziert ist sich nach Hinten zu richten, an dem zweiten Steuer-Abstand (CD2).

**5.** Eine Fahrzeug-Geschwindigkeits-Steuervorrichtung gemäß Anspruch 3, **dadurch gekennzeichnet, dass** die Fahrzeug-Geschwindigkeits-Steuerung (27) konfiguriert ist um die Verzögerungs-Steuerung an dem Fahrzeug durchzuführen wenn die Person identifiziert ist sich nach Vorne oder nach Außen seitwärts zu richten, und konfiguriert ist um die Stopp-Steuerung an dem Fahrzeugs durchzuführen wenn die Person identifiziert ist sich nach Hinten oder nach Innen seitlich zu richten, an dem zweiten Steuer-Abstand (CD2).

**6.** Eine Fahrzeug-Geschwindigkeits-Steuervorrichtung gemäß irgendeinem der Ansprüche 3 bis 5, **dadurch gekennzeichnet, dass** der Steuer-Abstand (CD1-CD3) einen dritten Steuer-Abstand (CD3) beinhaltet, an dem die Verzögerungs-Steuerung durchgeführt ist oder nicht durchgeführt ist für das Fahrzeug, abhängig von der Richtung der Person aufgrund der Erfassung der Person.

**7.** Eine Fahrzeug-Geschwindigkeits-Steuervorrichtung gemäß Anspruch 6, **dadurch gekennzeichnet, dass** die Fahrzeug-Geschwindigkeits-Steuerung (27) konfiguriert ist um die Verzögerungs-Steuerung an dem Fahrzeug durchzuführen wenn die Person identifiziert ist sich nach Hinten zu richten, und konfiguriert ist, die Verzögerungs-Steuerung nicht durchzuführen wenn die Person identifiziert ist, sich nach Vorne oder Seitwärts zu richten, an dem dritten Steuer-Abstand (CD3).

8. Eine Fahrzeug-Geschwindigkeits-Steuervorrichtung gemäß Anspruch 6, **dadurch gekennzeichnet, dass** die Fahrzeug-Geschwindigkeits-Steuerung (27) konfiguriert ist um die Verzögerungs-Steuerung an dem Fahrzeug durchzuführen, wenn die Person identifiziert ist sich nach Hinten oder nach Innen seitwärts zu richten, und konfiguriert ist, die Verzögerungs-Steuerung nicht durchzuführen wenn die Person identifiziert ist sich nach Vorne oder nach Außen seitwärts zu richten, an dem dritten Steuer-Abstand (CD3).

9. Eine Fahrzeug-Geschwindigkeits-Steuervorrichtung gemäß irgendeinem der Ansprüche 2 bis 8, **gekennzeichnet durch** einen Fahrzeug-Geschwindigkeits-Sensor (29), konfiguriert um die Geschwindigkeit des Fahrzeugs zu erfassen; und
eine Steuer-Abstand-Setzeinheit (31), konfiguriert um den Steuer-Abstand (CD1-CD3) in Übereinstimmung mit der erfassten Geschwindigkeit des Fahrzeugs zu setzen.

10. Ein Fahrzeug, vorgesehen mit der Fahrzeug-Geschwindigkeits-Steuervorrichtung gemäß irgendeinem der Ansprüche 1 bis 9.

11. Ein Fahrzeug-Geschwindigkeits-Steuerverfahren, das umfasst:

Aufnehmen einer Abbildung vor einem Fahrzeug;
Erfassen einer Person von der Abbildung zu erfassen;
Erfassen eines Abstands zwischen dem Fahrzeug und der Person; und
Steuern einer Geschwindigkeit des Fahrzeugs in Übereinstimmung mit dem Abstand zwischen dem Fahrzeug und der Person, **gekennzeichnet durch** Identifizieren einer Richtung der Person; und
Steuern der Geschwindigkeit des Fahrzeugs in Übereinstimmung mit dem Abstand zwischen dem Fahrzeug und der Person sowie der Richtung der Person.

12. Ein Fahrzeug-Geschwindigkeits-Steuerverfahren gemäß Anspruch 11,
**gekennzeichnet durch**
Steuern der Geschwindigkeit des Fahrzeugs in Übereinstimmung mit dem Abstand zwischen dem Fahrzeug und der Person mit Bezug auf eine Steuer-Abstand (CD1-CD3), gesetzt vor dem Fahrzeug, vorzugsweise beinhaltet der Steuer-Abstand (CD1-CD3) einen ersten Steuer-Abstand (CD1), an dem eine Stopp-Steuerung aufgrund der Erfassung der Person durchgeführt ist, und einen zweiten Steuer-Abstand (CD2), an dem eine Verzögerungs-Steuerung oder die Stopp-Steuerung aufgrund der Erfassung der Person in Übereinstimmung mit der Richtung der Person durchgeführt ist.

13. Ein Fahrzeug-Geschwindigkeits-Steuerverfahren gemäß Anspruch 12, **dadurch gekennzeichnet, dass** die Fahrzeug-Geschwindigkeit die Verzögerungs-Steuerung des Fahrzeugs durchführt, wenn die Person identifiziert ist sich nach Vorne oder zur Seite zu richten, und konfiguriert ist um die Stopp-Steuerung des Fahrzeugs durchzuführen, wenn die Person identifiziert ist sich nach Hinten zu richten, an dem zweiten Steuer-Abstand (CD2), oder durchführen der Verzögerungs-Steuerung an dem Fahrzeug, wenn die Person identifiziert ist sich nach Vorne oder nach Außen seitwärts zu richten, und konfiguriert ist um die Stopp-Steuerung an dem Fahrzeugs durchzuführen wenn die Person identifiziert ist sich nach Hinten oder nach Innen seitlich zu richten, an dem zweiten Steuer-Abstand (CD2).

14. Ein Fahrzeug-Geschwindigkeits-Steuerverfahren gemäß irgendeinem der Ansprüche 12 bis 13, **dadurch gekennzeichnet, dass** der Steuer-Abstand (CD1-CD3) einen dritten Steuer-Abstand (CD3) beinhaltet, an dem die Verzögerungs-Steuerung durchgeführt ist oder nicht durchgeführt ist für das Fahrzeug, abhängig von der Richtung der Person aufgrund der Erfassung der Person.

15. Ein Fahrzeug-Geschwindigkeits-Steuerverfahren gemäß Anspruch 14,
**gekennzeichnet durch**
Durchführen der Verzögerungs-Steuerung an dem Fahrzeug wenn die Person identifiziert ist sich nach Hinten zu richten, und konfiguriert ist, die Verzögerungs-Steuerung nicht durchzuführen wenn die Person identifiziert ist, sich nach Vorne oder Seitwärts zu richten, an dem dritten Steuer-Abstand (CD3), oder
Durchführen der Verzögerungs-Steuerung an dem Fahrzeug, wenn die Person identifiziert ist sich nach Hinten oder nach Innen seitwärts zu richten, und konfiguriert ist, die Verzögerungs-Steuerung nicht durchzuführen wenn die Person identifiziert ist sich nach Vorne oder nach Außen seitwärts zu richten, an dem dritten Steuer-Abstand (CD3).

**Revendications**

1. Dispositif de contrôle de vitesse de véhicule, comprenant :

   un capteur d'image (3a) configuré pour capturer une image devant un véhicule ;
   un détecteur de personne (17) configuré pour détecter une personne à partir de l'image ;
   un détecteur de distance (21) configuré pour détecter une distance entre le véhicule et la personne ; et
   un contrôleur de vitesse de véhicule (27) configuré pour contrôler la vitesse du véhicule conformément à la distance entre le véhicule et la personne, **caractérisé par**
   une unité d'identification de direction de personne (25) configurée pour identifier la direction de la personne,
   dans lequel le contrôleur de vitesse de véhicule (27) est configuré pour contrôler la vitesse du véhicule conformément à la distance entre le véhicule et la personne ainsi qu'à la direction de la personne.

2. Dispositif de contrôle de vitesse de véhicule selon la revendication 1, **caractérisé en ce que** le contrôleur de vitesse du véhicule (27) est configuré pour contrôler la vitesse du véhicule conformément à la distance entre le véhicule et la personne en référence à une distance de contrôle (CD1-CD3) établie devant le véhicule.

3. Dispositif de contrôle de vitesse de véhicule selon la revendication 2, **caractérisé en ce que** la distance de contrôle (CD1-CD3) inclut une première distance de contrôle (CD1) à laquelle un contrôle d'arrêt est mis en oeuvre lors de la détection de la personne, et une deuxième distance de contrôle (CD2) à laquelle un contrôle de décélération ou le contrôle d'arrêt est mis en oeuvre lors de la détection de la personne conformément à la direction de la personne.

4. Dispositif de contrôle de vitesse de véhicule selon la revendication 3, **caractérisé en ce que** le contrôleur de vitesse de véhicule (27) est configuré pour mettre en oeuvre le contrôle de décélération du véhicule quand la personne est identifiée comme se dirigeant vers l'avant ou latéralement, et configuré pour mettre en oeuvre le contrôle d'arrêt du véhicule quand la personne est identifiée comme se dirigeant vers l'arrière à la deuxième distance de contrôle (CD2).

5. Dispositif de contrôle de vitesse de véhicule selon la revendication 3, **caractérisé en ce que** le contrôleur de vitesse de véhicule (27) est configuré pour mettre en oeuvre le contrôle de décélération du véhicule quand la personne est identifiée comme se dirigeant vers l'avant ou latéralement vers l'extérieur, et configuré pour mettre en oeuvre le contrôle d'arrêt du véhicule quand la personne est identifiée comme se dirigeant vers l'arrière ou latéralement vers l'intérieur à la deuxième distance de contrôle (CD2).

6. Dispositif de contrôle de vitesse de véhicule selon l'une quelconque des revendications 3 à 5, **caractérisé en ce que** la distance de contrôle (CD1-CD3) inclut une troisième distance de contrôle (CD3) à laquelle le contrôle de décélération est mis en oeuvre ou n'est pas mis en oeuvre sur le véhicule en fonction de la direction de la personne lors de la détection de la personne.

7. Dispositif de contrôle de vitesse de véhicule selon la revendication 6, **caractérisé en ce que** le contrôleur de vitesse de véhicule (27) est configuré pour mettre en oeuvre le contrôle de décélération du véhicule quand la personne est identifiée comme se dirigeant vers l'arrière, et est configuré pour ne pas mettre en oeuvre le contrôle de décélération quand la personne est identifiée comme se dirigeant vers l'avant ou latéralement à la troisième distance de contrôle (CD3).

8. Dispositif de contrôle de vitesse de véhicule selon la revendication 6, **caractérisé en ce que** le contrôleur de vitesse de véhicule (27) est configuré pour mettre en oeuvre le contrôle de décélération du véhicule quand la personne est identifiée comme se dirigeant vers l'arrière ou latéralement vers l'intérieur, et est configuré pour ne pas mettre en oeuvre le contrôle de décélération quand la personne est identifiée comme se dirigeant vers l'avant ou latéralement vers l'extérieur à la troisième distance de contrôle (CD3).

9. Dispositif de contrôle de vitesse de véhicule selon l'une quelconque des revendications 2 à 8, **caractérisé par**
   un capteur de vitesse de véhicule (29) configuré pour détecter la vitesse du véhicule ; et
   une unité d'établissement de distance de contrôle (31) configurée pour établir la distance de contrôle (CD1-CD3) conformément à la vitesse détectée du véhicule.

**10.** Véhicule pourvu du dispositif de contrôle de vitesse de véhicule selon l'une quelconque des revendications 1 à 9.

**11.** Procédé de contrôle de vitesse de véhicule, comprenant :

la capture d'une image devant un véhicule ;
la détection d'une personne à partir de l'image ;
la détection d'une distance entre le véhicule et la personne ; et
le contrôle d'une vitesse du véhicule conformément à la distance entre le véhicule et la personne,
**caractérisé par**
l'identification d'une direction de la personne ; et
le contrôle de la vitesse du véhicule conformément à la distance entre le véhicule et la personne ainsi qu'à la direction de la personne.

**12.** Procédé de contrôle de vitesse de véhicule selon la revendication 11, **caractérisé par**
le contrôle de la vitesse du véhicule conformément à la distance entre le véhicule et la personne en référence à une distance de contrôle (CD1-CD3) établie à l'avant du véhicule, la distance de contrôle (CD1-CD3) incluant de préférence une première distance de contrôle (CD1) à laquelle un contrôle d'arrêt est mis en oeuvre lors de la détection de la personne, et une deuxième distance de contrôle (CD2) à laquelle un contrôle de décélération ou le contrôle d'arrêt est mis en oeuvre lors de la détection de la personne conformément à la direction de la personne.

**13.** Procédé de contrôle de vitesse de véhicule selon la revendication 12, **caractérisé par**
la mise en oeuvre d'un contrôle de décélération du véhicule quand la personne est identifiée comme se dirigeant vers l'avant ou latéralement, et configuré pour mettre en oeuvre le contrôle d'arrêt du véhicule quand la personne est identifiée comme se dirigeant vers l'arrière à la deuxième distance de contrôle (CD2), ou
la mise en oeuvre du contrôle de décélération du véhicule quand la personne est identifiée comme se dirigeant vers l'avant ou latéralement vers l'extérieur, et configuré pour mettre en oeuvre le contrôle d'arrêt du véhicule quand la personne est identifiée comme se dirigeant vers l'arrière ou latéralement vers l'intérieur à la deuxième distance de contrôle (CD2).

**14.** Procédé de contrôle de vitesse de véhicule selon l'une quelconque des revendications 12 et 13, **caractérisé en ce que** la distance de contrôle (CD1-CD3) inclut une troisième distance de contrôle (CD3) à laquelle le contrôle de décélération est mis en oeuvre ou n'est pas mis en oeuvre sur le véhicule en fonction de la direction de la personne lors de la détection de la personne.

**15.** Procédé de contrôle de vitesse de véhicule selon la revendication 14, **caractérisé par**
la mise en oeuvre du contrôle de décélération du véhicule quand la personne est identifiée comme se dirigeant vers l'arrière, et est configuré pour ne pas mettre en oeuvre le contrôle de décélération quand la personne est identifiée comme se dirigeant vers l'avant ou latéralement à la troisième distance de contrôle (CD3), ou
la mise en oeuvre du contrôle de décélération du véhicule quand la personne est identifiée comme se dirigeant vers l'arrière ou latéralement vers l'intérieur, et est configuré pour ne pas mettre en oeuvre le contrôle de décélération quand la personne est identifiée comme se dirigeant vers l'avant ou latéralement vers l'extérieur à la troisième distance de contrôle (CD3).

**Fig.1**

**Fig.2**

Fig.3

**Fig.4**

| CD1 | CD2 | CD3 |
|-----|-----|-----|
| 0 ~ 4.5 [m] | 4.5 ~ 6.2 [m] | 6.2 ~ 9.5 [m] |

**Fig.5**

```
                        ┌──────────────┐
                        │    Start     │
                        └──────┬───────┘
                               │
S01            ┌───────────────────────────────┐
               │        CAPTURE IMAGE           │
               └───────────────┬───────────────┘
                               │
S02            ┌───────────────────────────────┐
               │        DETECT PERSON           │
               └───────────────┬───────────────┘
                               │
S03            ┌───────────────────────────────┐
               │       DETECT DISTANCE          │
               └───────────────┬───────────────┘
                               │
S04                    ◇ WITHIN CONTROL DISTANCE? ◇──── No ────┐
                               │                               │
                              Yes                              │
                               │                               │
S05            ◇ WITHIN FIRST CONTROL DISTANCE? ◇─── No ───┐   │
                               │                           │   │
                              Yes                          ▼   │
                               │          S11   ┌──────────────────────────┐
                               │                │ IDENTIFY PERSON DIRECTION │
                               │                └────────────┬─────────────┘
                               │                             │
                               │          S12     ◇ WITHIN SECOND CONTROL DISTANCE? ◇─── No ──┐
                               │                             │                                │
                               │                            Yes                               │
                               │                             │         S31   ◇ FACE VEHICLE? ◇── Yes ──┐
                               │          S13   ◇ FACE VEHICLE? ◇── Yes ──┐         │                  │
                               │                  │                       │        No                  │
                               │                 No                       │        │                   │
                               ▼                  ▼                       ▼        ▼                   │
S06            ┌───────────────────────┐   S21  ┌───────────────────────────────┐                     │
               │   PERFORM STOP        │        │   PERFORM DECELERATION         │                     │
               │     CONTROL           │        │        CONTROL                 │                     │
               └───────────┬───────────┘        └───────────────┬───────────────┘                     │
                           │                                    │                                      │
                           │◄───────────────────────────────────┴──────────────────────────────────────┘
                           ▼
                ┌──────────────────┐
                │     Return       │
                └──────────────────┘
```

**Fig.6**

Fig.7

Fig.8

EP 2 915 715 B1

| VEHICLE SPEED | CD1' | CD2' | CD3' |
|---|---|---|---|
| FIRST VEHICLE SPEED | 0 ~ 2.4 [m] | 2.4 ~ 3.5 [m] | 3.5 ~ 5.7 [m] |
| SECOND VEHICLE SPEED | 0 ~ 4.5 [m] | 4.5 ~ 6.2 [m] | 6.2 ~ 9.5 [m] |

Fig.9

**Fig.10**

**Fig.11**

**EP 2 915 715 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120035846 A1
- JP 2003005832 A